# EUROPÄISCHE PATENTANMELDUNG

(11) **EP 1 138 540 A2**
(43) Veröffentlichungstag der Anmeldung: **04.10.2001**
(21) Anmeldenummer: 01890107.4
(22) Anmeldetag: 30.03.2001
(51) Int. Cl.: B60K 15/04

(54) **Einfüllstutzen**

(30) Priorität: 31.03.2000 AT 2452000
(71) Anmelder: Tesma Motoren- und Getriebetechnik Ges.m.b.H., 8160 Preding-Krottendorf (AT)
(72) Erfinder: Pozgainer, Günter, Dr., 8010 Graz (AT); Suppan, Wolfgang, 8322 Studenzen (AT); Maier, Bernhard, 8344 Bad Gleichenberg (AT)
(74) Vertreter: Kovac, Werner, Dipl.-Ing.

(57) **Zusammenfassung**

Die Erfindung betrifft einen Einfüllstutzen für den Treibstofftank eines Kraftfahrzeuges mit einer innen liegenden Verschlussklappe (1), die eine Einfüllöffnung am Endbereich eines innen liegenden Gehäuseteils (2) aus Kunststoff verschließt und die über die Zapfpistole zum Befüllen des Treibstofftanks in ihre offene Lage bringbar ist, wobei zwischen dem Gehäuseteil (2) und der Verschlussklappe (3) eine am Gehäuseteil (2) angeordnete Elastomerdichtung (6) wirksam ist. Die Dichtung (6) ist auf einen Dichtungsträger (5) aufgebracht, welcher mit dem Kunststoffgehäuse verbunden ist, wobei die Dichtung (6) sowohl zur Verschlussklappe (1) als auch zum Gehäuseteil (2) abdichtet.

## Beschreibung

Die Erfindung betrifft einen Einfüllstutzen für den Treibstofftank eines Kraftfahrzeuges mit einer innen liegenden Verschlussklappe, die eine Einfüllöffnung am Endbereich eines innen liegenden Gehäuseteils aus Kunststoff verschließt und die über die Zapfpistole zum Befüllen des Treibstofftanks in ihre offene Lage bringbar ist, wobei zwischen dem Gehäuseteil und der Verschlussklappe eine am Gehäuseteil angeordnete Elastomerdichtung, wirksam ist.

Ein derartiger Einfüllstutzen ist beispielsweise aus der WO 99/03697 bekannt. Der Verschluss dieses Einfüllstutzens wird von einer innen liegenden Verschlussklappe gebildet. Es ist daher, entgegen den sonst allgemein üblichen Ausführungen, kein aufschraubbarer oder mittels eines Bajonettverschlusses oder dergleichen verrastbarer äußerer Tankverschluss mehr vorgesehen. Demnach soll die flüssigkeits- und gasdichte Abdichtung zwischen dem Treibstofftank auf der einen Seite und der äußeren Umgebung auf der anderen Seite durch den Klappenverschluss gewährleistet sein. Das Gehäuseteil, das an seinem Endbereich die von der Verschlussklappe zu verschließende Einfüllöffnung bildet, ist eines jener Bestandteile des Einfüllstutzens, welche aus Kunststoff gefertigt werden. Als problematisch hat sich nun erwiesen, dass dieses Kunststoffgehäuseteil durch den flüssigen Treibstoff oder auch durch Treibstoffdämpfe quillt, sodass nach einer gewissen Betriebsdauer eine optimale Funktion der lediglich in einer umlaufenden Nut des Gehäuses sitzende Elastomerdichtung bei geschlossener Verschlussklappe nicht mehr gewährleistet ist. Durch die Quellung des Kunststoffes wird der Presssitz für die Dichtung am Gehäuseteil beeinträchtigt.

Hier setzt nun die Erfindung ein, der die Aufgabe zu Grunde liegt, ein Dichtungskonzept aufzufinden, das bei einem etwaigen Quellen des Kunststoffgehäuses unter dem Einfluss von Kraftstoff eine zuverlässige und dauerhaltbare Abdichtung der Verschlussklappe an der Einfüllöffnung sicherstellt.

Gelöst wird die gestellte Aufgabe erfindungsgemäß dadurch, dass die Dichtung auf einem Dichtungsträger aufgebracht ist, welcher mit dem Kunststoffgehäuse verbunden ist, wobei die Dichtung sowohl zur Verschlussklappe als auch zum Gehäuseteil abdichtet.

Durch die Verbindung eines gesonderten Dichtungsträgers mit dem Gehäuseteil ist sichergestellt, dass auch bei einem Quellen des Kunststoffmaterials des Gehäuses die Dichtung in ihre Lage fixiert ist. Die "doppelt" wirkende Dichtung, die einerseits zur Verschlussklappe und andererseits zum Gehäuse abdichtet, gewährleistet die erforderliche und erwünschte Abdichtung der Verschlussklappe auf die Lebensdauer des Einfüllstutzens.

Die Verbindung des Dichtungsträgers zum Gehäuseteil kann durch Formschluss oder durch Befestigen erfolgen (Anspruch 2). Beide Maßnahmen gewährleisten einen sicheren, im Betrieb unlösbaren Halt des Dichtungsträgers.

Gemäß einer bevorzugten Ausführungsform der Erfindung ist der Dichtungsträger mitsamt der Dichtung in zumindest einer im Gehäuseteil ausgebildeten Ausnehmung gehalten (Anspruch 3). Auch diese Maßnahme unterstützt den Halt der Dichtung.

Die Dichtung selbst wird mit zwei Dichtteilen, beispielsweise Dichtwülsten oder Dichtlippen, versehen, wobei das eine Dichtteil an der Verschlussklappe und das zweite am Boden der Ausnehmung(en) abstützbar ist (Anspruch 4). Dadurch wird wirkungsvoll die erwünschte Dichtwirkung begünstigt.

Die Dichtung wird am Dichtungsträger vorzugsweise anvulkanisiert oder angespritzt (Anspruch 5). Damit ist die Dichtung am Dichtungsträger unverlierbar gehalten.

Zur formschlüssigen Verbindung des Dichtungsträgers mit dem Gehäuseteil wird insbesondere vorgesehen, dass der Dichtungsträger mit einem oder mehreren Verankerungsteil(en) versehen ist, das bzw. die im Bereich der Ausnehmung(en) formschlüssig gehalten bzw. befestigt ist bzw. sind (Anspruch 6). Dadurch wird der Dichtungsträger besonders sicher und von einer möglichen Quellung des Kunststoffmaterials weitgehend unbeeinflusst am Gehäuse verankert.

Bei einer bevorzugten, besonders haltbaren Möglichkeit der Verbindung des Dichtungsträgers mit dem Gehäuseteil wird ein Randbereich des Gehäuseteils, beispielsweise mittels Ultraschall, auf den bzw. die Verankerungsteil(e) umgebördelt (Anspruch 7). Alternativ dazu kann die Verbindung des Dichtungsträgers auch durch Verschrauben, Verschweißen, Verclipsen und dergleichen erfolgen (Anspruch 8).

Von besonderem Vorteil ist eine Ausführungsform, bei der die beiden Dichtteile der Dichtung zumindest im Wesentlichen in axialer Richtung, bezogen auf die Längsachse des Gehäuses, abdichtend wirken (Anspruch 9). Dadurch kann eine mögliche Quellung des Kunststoffes des Gehäuses durch eine elastische Verformung der Dichtung besonders leicht ausgeglichen werden.

Weitere Merkmale, Vorteile und Einzelheiten werden nun anhand der Zeichnung, die ein Ausführungsbeispiel darstellt, näher beschrieben. Die zeigt die einzige Zeichnungsfigur,

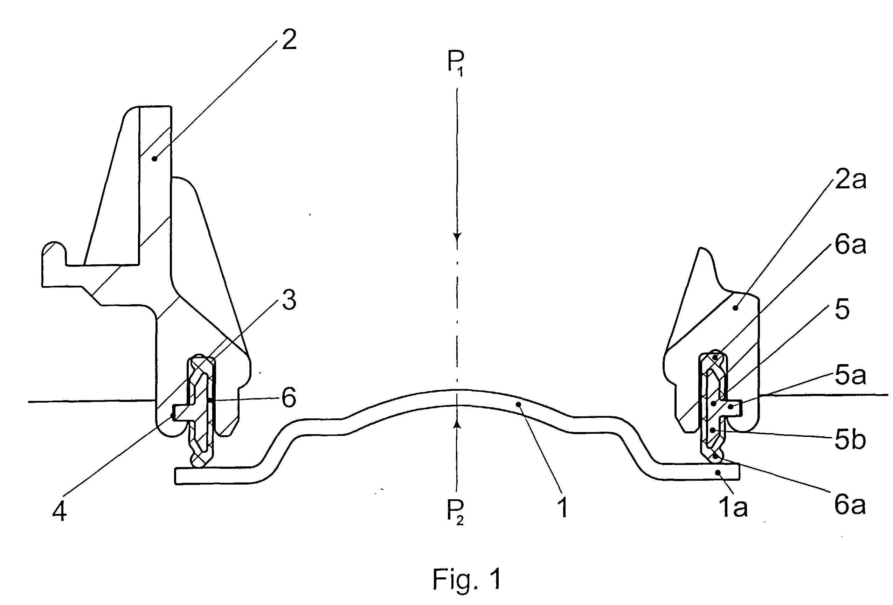

Fig. 1 schematisch einen axialen Längsschnitt durch einen Teilbereich eines Einfüllstutzens mit innen liegender Verschlussklappe.

In der Zeichnungsfigur sind dabei vom Einfüllstutzen nur jene Bestandteile dargestellt, die für das Verständnis der gegenständlichen Erfindung wesentlich sind.

Grundsätzlich handelt es sich bei der gegenständlichen Erfindung um einen Einfüllstutzen für den Treibstofftank eines Kraftfahrzeuges, bei dem eine im Inneren des Einfüllstutzen angeordnete und gelagerte Verschlussklappe 1 an Stelle der weit verbreiteten, den Einfüllstutzen von außen abschließenden Schraub- oder Bajonettverschlüssen vorgesehen ist.

Dargestellt ist ein insbesondere rohrförmiges inneres Gehäuse 2 des Einfüllstutzens, dessen Öffnung am inneren Ende durch die Verschlussklappe 1 geschlossen gehalten wird und welches aus Kunststoff besteht. Die Verschlussklappe 1 ist durch die nicht dargestellte Zapfpistole, die in Richtung des Pfeiles P₁ aus Fig. 1 beim Betanken in den Einfüllstutzen eingeführt wird, in ihre offene Lage schwenkbar. Nach dem Betanken und dem Entfernen der Zapfpistole gelangt die Verschlussklappe 1 über einen nicht dargestellten Betätigungsmechanismus in ihre die Öffnung verschließende Lage. Der Pfeil P₂ versinnbildlicht die Beaufschlagung der Verschlussklappe 1.

Dieser Bestätigungsmechanismus sowie die weiteren hier nicht dargestellten und auch nicht beschriebenen Bauteile des Einfüllstutzens können gemäß der in den Fig. 1 bis 6 der WO 99/03697 dargestellten und in dieser Druckschrift beschriebenen Ausführungsform eines Einfüllstutzens ausgeführt sein.

Zwischen dem Endbereich des Gehäuses 2 und dem Randbereich der Verschlussklappe 1 ist für eine flüssigkeitsdichte und eine gegenüber Treibstoffdämpfen zumindest weitgehend dichte Abdichtung zu sorgen. Die Art dieser Abdichtung bildet den Gegenstand dieser Erfindung. Wie aus der Zeichnungsfigur hervorgeht, ist der freie Endbereich des Gehäuses 2 als ein verbreiteter Aufnahmebereich 2a ausgebildet, wo entweder über den Umfang verteilt mehrere Ausnehmungen 3 oder eine über den Umfang umlaufende Ausnehmung 3 ausgebildet ist. Bei der dargestellten Ausführungsform ist eine nutartig umlaufende Ausnehmung 3 vorgesehen, die in axialer Richtung (bezogen auf die entlang der Pfeile P₁ und P₂ verlaufende Mittelachse des Gehäuses 2) ausgerichtet ist, sodass die Ausnehmung 3 nach unten, zur Verschlussklappe 1, offen ist. Über eine Schulter geht ein innerer schmälerer Bereich in einen weiter außen liegenden breiteren Bereich der Ausnehmung 3 über. Durch einen mittels Ultraschall nachträglich nach innen umgebördelten Rand wird zwischen der Schulter und diesem Rand ein Verankerungsteil 5a eines Dichtungsträgers 5 formschlüssig eingebunden.

Der Dichtungsträger 5 ist ein an die Breite der Ausnehmung 3 angepasstes Bauteil, wird ringförmig gestaltet und weist bei der dargestellten Ausführungsform einen T-förmigen Querschnitt auf. Neben dem Verankerungsteil 5a weist der Dichtungsträger 5 zwei vom Balken des T gebildete Stützteile 5b auf. Der Dichtungsträger 5 kann aus Metall oder auch aus Kunststoff bestehen. Dabei kann ein einziges, den Dichtungsträger 5 umlaufendes Verankerungsteil 5a vorgesehen werden oder es können mehrere über den Umfang des Dichtungsträgers 5 verteilte Verankerungsteile 5a mit insbesondere übereinstimmenden Querschnitten vorgesehen werden. In diesem Fall erfolgt die formschlüssige Verbindung an mehreren über den Umfang verteilten Stellen.

Die bereits erwähnte Dichtung 6 ist eine Elastomerdichtung, insbesondere eine Gummidichtung, die als Ringdichtung ausgeführt ist. Die Dichtung 6 umschließt die Stützteile 5b des Dichtungskörpers 5 und wird auf den Dichtungsträger 5 aufvulkanisiert oder direkt aufgespritzt. Beidseitig der Stützteile 5b sind Dichtteile 6a, hier als wulstartige Ansätze, ausgebildet. Die Dichtwirkung wird durch die beiden Teile 6a bewirkt, von welchen das eine das Gehäuse 2 überragt und bei geschlossener Verschlussklappe 1 an dessen umlaufenden Randbereich zur Anlage kommt und das zweite von der Verschlussklappe 1 gegen den Boden der Aufnahmenut 3 gedrückt wird.

Wird der Dichtungsträger 5 aus Kunststoff gefertigt so kann er beim Umbördeln des Randes mitverschweißt werden.

Durch die Erfindung ist sichergestellt, dass ein Quellen des Kunststoffmaterials des Gehäuses 2, welches nach längerem Gebrauch durch die Einwirkung des flüssigen Treibstoffs und der Treibstoffdämpfe erfolgt, keine Auswirkungen auf die Dichtwirkung der Dichtung und auf deren Lebensdauer hat.

Die Erfindung ist auf die dargestellte bevorzugte Ausführungsform nicht eingeschränkt. So kann beispielsweise die formschlüssige Verbindung zwischen dem Dichtungsträger 5 und dem Gehäuse 2 auf eine andere Weise, beispielsweise durch eine Schnappverbindung, durch Verschrauben oder durch Kleben erfolgen. Die Verbindung kann am gesamten Umfang der Aufnahmenut oder auch nur an einzelnen Stellen derselben durchgeführt werden.

Auch die Dichtung kann abweichend ausgeführt werden, sie kann beispielsweise Dichtlippen aufweisen. Es kann auch der Dichtungsträger eine andere Form bzw. einen anderen Querschnitt aufweisen. Grundsätzlich sind jedoch Dichtung und Dichtungsträger aufeinander entsprechend abzustimmen.

## Patentansprüche

1. Einfüllstutzen für den Treibstofftank eines Kraftfahrzeuges mit einer innen liegenden Verschlussklappe, die eine Einfüllöffnung am Endbereich eines innen liegenden Gehäuseteils aus Kunststoff verschließt und die über die Zapfpistole zum Befüllen des Treibstofftanks in ihre offene Lage bringbar ist, wobei zwischen dem Gehäuseteil und der Verschlussklappe eine am Gehäuseteil angeordnete Elastomerdichtung wirksam ist, **dadurch gekennzeichnet, dass** die Dichtung (6) auf einen Dichtungsträger (5) aufgebracht ist, welcher mit dem Kunststoffgehäuse verbunden ist, wobei die Dichtung (6) sowohl zur Verschlussklappe (1) als auch zum Gehäuseteil (2) abdichtet.

2. Einfüllstutzen nach Anspruch 1, **dadurch gekennzeichnet, dass** die Verbindung des Dichtungsträgers (5) zum Gehäuseteil (2) durch Formschluss oder durch Befestigen erfolgt.

3. Einfüllstutzen nach Anspruch 1 oder 2, **dadurch gekennzeichnet, dass** der Dichtungsträger (5) mitsamt der Dichtung (6) in zumindest einer am Gehäuseteil (2) ausgebildeten Ausnehmung (3) gehalten ist.

4. Einfüllstutzen nach einem der Ansprüche 1 bis 3, **dadurch gekennzeichnet, dass** die Dichtung (6) mit zwei Dichtteilen (6a), beispielsweise Dichtwülsten oder Dichtlippen, versehen ist, wobei das eine Dichtteil (6a) an der Verschlussklappe (1) und das zweite am Boden des oder der Ausnehmung(en) (3) abstützbar ist.

5. Einfüllstutzen nach einem der Ansprüche 1 bis 4, **dadurch gekennzeichnet, dass** die Dichtung (6) am Dichtungsträger (3) anvulkanisiert oder aufgespritzt ist.

6. Einfüllstutzen nach einem der Ansprüche 1 bis 5, **dadurch gekennzeichnet, dass** der Dichtungsträger (5) mit einem oder mehreren Verankerungsteil(en) (5a) versehen ist, welches bzw. welche im Bereich der Ausnehmung(en) (3) formschlüssig gehalten oder befestigt ist bzw. sind.

7. Einfüllstutzen nach einem der Ansprüche 1 bis 6, **dadurch gekennzeichnet, dass** zur Verbindung des Dichtungsträgers (5) ein die Ausnehmung(en) (3) begrenzender Randbereich des Gehäuseteils (2), beispielsweise mittels Ultraschall, zum bzw. zu den Verankerungsteil(en) (5a) umgebördelt ist.

8. Einfüllstutzen nach einem der Ansprüche 1 bis 6, **dadurch gekennzeichnet, dass** der Dichtungsträger (6) mit dem Gehäuseteil (2) durch Verschrauben, Verschweißen, Verclipsen oder dergleichen verbunden ist.

9. Einfüllstutzen nach einem der Ansprüche 1 bis 8, **dadurch gekennzeichnet, dass** die beiden Dichtteile (6a) der Dichtung (6) zumindest im Wesentlichen in axialer Richtung, bezogen auf die Längsachse des Gehäuses (2), abdichtend wirken.
